(19) Europäisches Patentamt
European Patent Office
Office européen des brevets

(11) EP 4 772 493 A1

(12) EUROPEAN PATENT APPLICATION

(43) Date of publication:
08.07.2026 Bulletin 2026/28

(21) Application number: 25190229.2

(22) Date of filing: 17.07.2025

(51) International Patent Classification (IPC):
C04B 35/573 (2006.01)      C04B 35/653 (2006.01)
C04B 41/00 (2006.01)        C04B 41/50 (2006.01)
C04B 41/53 (2006.01)        C04B 41/85 (2006.01)
C04B 41/91 (2006.01)        G02B 5/08 (2006.01)
H01S 3/04 (2006.01)

(52) Cooperative Patent Classification (CPC):
(C-Sets available)
C04B 35/573; C04B 35/653; C04B 41/009;
C04B 41/5096; C04B 41/53; C04B 41/85;
C04B 41/91; G02B 5/08; C04B 2235/428;
C04B 2235/6026; C04B 2235/612; C04B 2235/616
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 06.01.2025 US 202519011280

(71) Applicant: II-VI Delaware, Inc.
Wilmington, DE 19890 (US)

(72) Inventors:
• KLARNER, Andrew
Wilmington, 19890 (US)

• WATKINS, Matt
Wilmington, 19890 (US)
• MCANANY, Sean
Wilmington, 19890 (US)

(74) Representative: Schmidt, Christian
ZSP Patentanwälte PartG mbB
Hansastraße 32
80686 München (DE)

(54) IN-SITU VERTICAL SILICON SURFACES ON REACTION BONDED SILICON CARBIDE BODY BY CAPILLARY RISE MECHANISM

(57) A method of producing vertical silicon surfaces for mirror substrate applications is described. In some embodiments, methods as described herein may create a polishable silicon layer on a SiSiC surface.

EP 4 772 493 A1

(52) Cooperative Patent Classification (CPC): (Cont.)

C-Sets
**C04B 41/009, C04B 35/565;**
**C04B 41/5096, C04B 41/4523, C04B 41/4578**

**Description**

CROSS-REFERENCE TO RELATED APPLICATIONS/ INCORPORATION BY REFERENCE

FIELD

Aspects of the present disclosure relate to silicon surfaces for mirror substrate applications. More specifically, certain embodiments of the disclosure relate to a method to create a polishable vertical silicon layer on a SiSiC surface.

BACKGROUND

Conventional approaches for making mirror surfaces on bare SiSiC mirror substrates may have issues due to grain size and the multiphase microstructure. Moreover, application of polishable cladding to SiSiC, such as CVD SiC or PCVD Si, are problematic due to cost and lead time.
Further limitations and disadvantages of conventional and traditional approaches will become apparent to one of skill in the art, through comparison of such systems with some aspects of the present disclosure as set forth in the remainder of the present application with reference to the drawings.

BRIEF SUMMARY

A system and/or method for making silicon surfaces for mirror substrate applications, substantially as shown in and/or described in connection with at least one of the figures, as set forth more completely in the claims.
These and other advantages, aspects and novel features of the present disclosure, as well as details of an illustrated embodiment thereof, will be more fully understood from the following description and drawings.

BRIEF DESCRIPTION OF SEVERAL VIEWS OF THE DRAWINGS

FIG. 1 is a diagram of reaction bonded silicon carbide, in accordance with an example embodiment of the disclosure.

FIG. 2 shows some current solutions for creating a mirror ("mirroring") from SiSiC surfaces.

FIG. 3 shows formulas for calculating capillary rise (capillary action between plates), in accordance with an example embodiment of the disclosure.

FIG. 4 illustrates an example embodiment of the method of the invention.

FIG. 5 shows a sample with thick and thin grooves, in accordance with an example embodiment of the disclosure.

FIG. 6 shows the microstructure of a cross-sectioned thin groove, in accordance with an example embodiment of the disclosure.

FIG. 7 shows the relationship between channel design and mirror height, in accordance with an example embodiment of the disclosure.

FIG. 8 shows a filled groove with the contact angle noted, in accordance with an example embodiment of the disclosure.

FIG. 9 shows a schematic of a distance measuring interferometer stage with X Y vertical mirror surfaces, in accordance with an example embodiment of the disclosure.

DETAILED DESCRIPTION

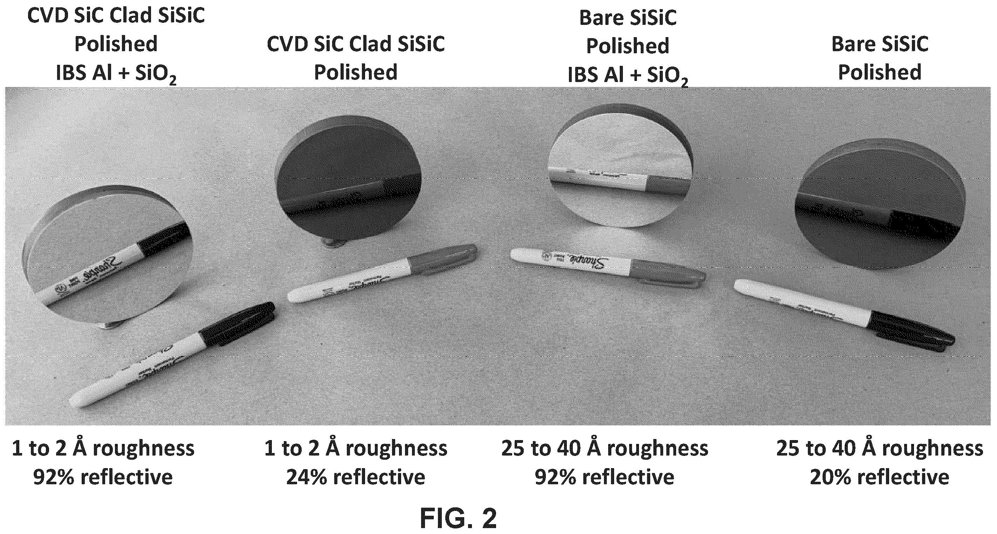

Reaction bonded silicon carbide (SiSiC) is a high-performance material used for mirror substrate applications due to its advantageous thermal properties and high specific stiffness. Mirror substrate applications include, but are not limited to creation of laser interferometers (distance interferometers).
However, the RB-SiC material is a two-phase composite of silicon carbide and silicon, which limits its ability to be polished to a mirror finish. Due to the grain size and heterogenous structure intrinsic to the composite, the achievable surface roughness and reflectivity of polished SiSiC is not suitable for use as a mirror. Optical polishing is preferably performed with a consistent rate of removal of microstructural material which is more easily achieved when the material to be polished is a single-phase material.
To overcome this, additional processing steps are taken (i.e. CVD cladding the surface with SiC) to create a polishable mirror surface. These steps are time consuming and costly. The present invention is a method to create a polishable single-phase silicon layer on the SiSiC surface during the reaction bonding processing step in order to create a mirror surface at lower cost and processing time.
A common method to put a mirror surface on reaction bonded SiC is CVD SiC cladding. The problem with this method is the cost and lead time. Another method is PECVD Si cladding. The problem with this method is cost, lead time, and inability to have a thick coating. FIG. 2 shows some of these current solutions for mirroring SiSiC surfaces. Bare SiSiC only polishes to 25 to 40 Å roughness, whereas many optical applications (mirror) require less than 20 Å roughness. A surface layer of Si on SiSiC would resolve this polishing issue.
This disclosure presents a method for making a surface layer of Si as a vertical silicon surface in-situ on a reaction bonded SiSiC body by utilizing the capillary rise mechanism. This creates a single-phase layer of elemental silicon which may be polished to form an optically reflective mirror. In one embodiment, vertical Si surfaces (Si layers) are produced on reaction bonded SiC using capillary rise. The presence of the in-situ-formed silicon layer may eliminate the need for any additional steps (such as a cladding step), such that a mirror substrate can be efficiently produced, with a reduced cycle time.

The present disclosure permits the formation of an in-situ silicon layer which is sufficiently thick to machine or polish a mirror surface. The thickness of the elemental silicon layer may be, for example, at least about 0.1 mm; at least about 0.2 mm; or at least about 0.5 mm. Mirrors produced by the disclosed methods have less than about 50 Å roughness and may have reflectivity in the range of about 90-99%, after reflective coatings if required.

To produce this polishable single-phase Si layer, the steps include at least the following: (1) produce (green machine, 3D print, cast, etc.) a SiC green body with one or more grooves near the perimeter of the body; (2) infiltrate the body with silicon (thin grooves fill via capillary rise); (3) remove (via grinding, etc.) SiSiC crust to reveal Si surface; and (4) polish or machine Si surface to create a mirror. In some embodiments, the groove is within about 0.5mm to 2mm of the edge (perimeter) of the body. The SiSiC sacrificial layer ("SiSiC crust") is the SiSiC material between the groove and the edge of the body, which is removed to reveal the single-phase silicon layer, which may then be polished to create a mirror.

In summary, the present disclosure relates to a RB-SiC body with an in-situ formed silicon surface layer suited to optical polishing for precision mirror applications. Due to the close match between elemental silicon and RB-SiC material in terms of coefficient of thermal expansion (CTE), an in-situ formed assembly of the type described herein can be stably operated without substantial temperature-induced stress, which makes the assembly well suited to applications involving thermal cycling.

Compared to pure silicon, RB-SiC material has much greater stiffness, fracture toughness, strength, thermal conductivity, and wear resistance. Thus, a mirror device with a RB-SiC substrate but a polished silicon surface provides many performance advantages over a mirror formed solely of silicon. The present disclosure is applicable to the production of high-performance mirrors, including galvo mirrors for precisely directing laser beams, other laser-related mirrors, space mirrors, stage locating mirrors, and high-energy laser (HEL) mirrors.

Reaction-bonded silicon-carbide (RB-SiC, or SiSiC) material is a multiphase material formed by reactive infiltration in which molten elemental silicon (Si) is brought into contact with a porous mass of interconnected silicon-carbide (SiC) particles plus carbon (C) in a vacuum or inert atmosphere. The molten silicon is pulled into the mass of interconnected silicon-carbide particles and carbon, and the silicon reacts with the carbon in the mass to form additional silicon carbide. The resulting RB-SiC material contains primarily silicon carbide, but also unreacted, interconnected silicon.

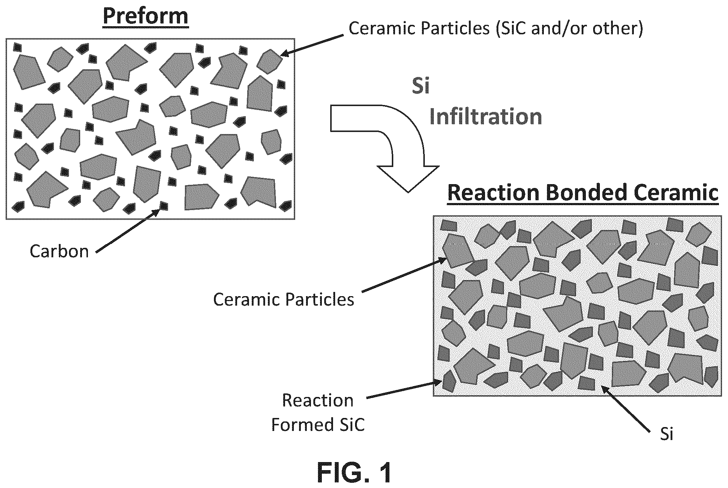

FIG. 1 is a diagram of reaction bonded silicon carbide (RB-SiC, also called SiSiC). Referring to Figure 1, reaction bonded SiC ceramics are produced by the reactive infiltration of molten Si into preforms of SiC + carbon. Upon infiltration, the molten Si reacts with the carbon to form additional SiC (Si + C → SiC), bonding the structure together. Specific steps include starting with a green body of ceramic particles (e.g. SiC) and carbon; infiltrating the green body with molten silicon; reacting the silicon with carbon to form secondary SiC; and creating a fully dense part with < 1% volume change. The final composite consists of the original SiC, reaction formed SiC and residual Si.

In the creation of reaction bonded silicon carbide for use as a substrate as described herein, preforms are utilized. A preform can be created with a slurry which is formed into the desired shape. In some embodiments, the ceramic component is a reaction bonded silicon carbide (RB-SiC) created from a perform produced with a slurry comprising SiC + C based binder + Deionized $H_2O$. In other embodiments, a preform can be created by 3D printing replacing the casting/green machining step. The preforms are green parts that can be manipulated further, including infiltration with molten Si, to end up with a finished component.

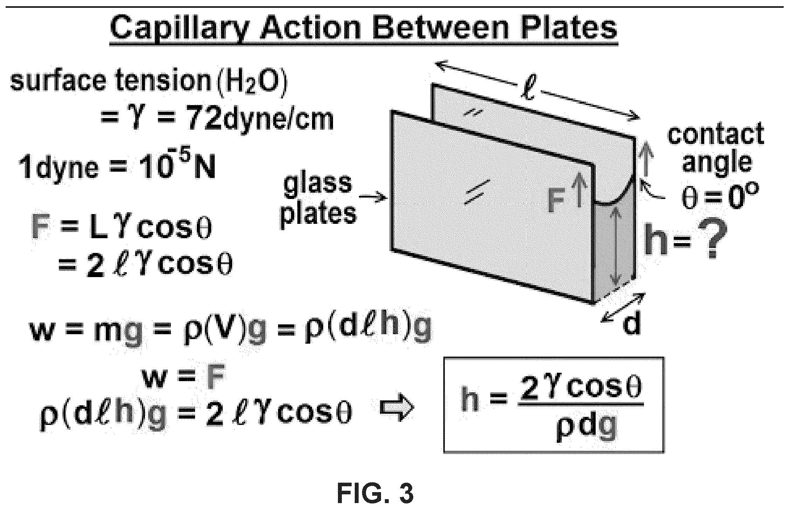

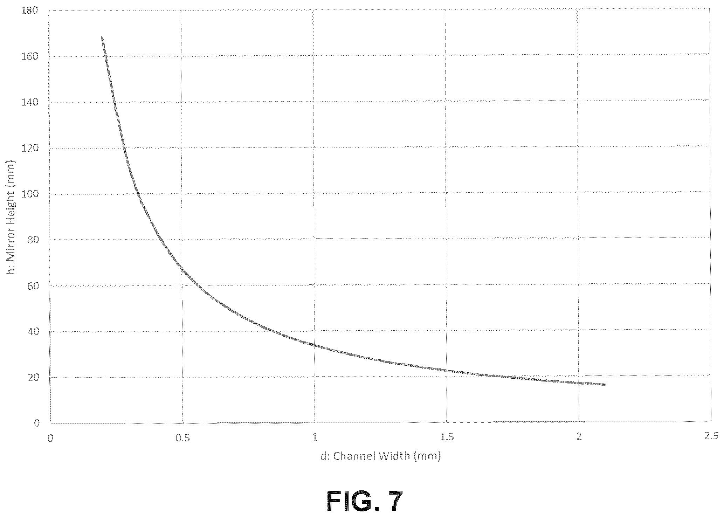

Capillary rise or capillary action is a phenomenon in which liquid spontaneously rises or falls in a narrow space (usually defined by walls). It occurs because of intermolecular forces between the liquid and surrounding solid surfaces. If the diameter of the space is sufficiently small, then the combination of surface tension (which is caused by cohesion within the liquid) and adhesive forces between the liquid and wall act to propel the liquid. Capillary action depends on a lot of factors such as liquid density, surface tension, and angle of contact. Surface tension is the tendency of liquid surfaces at rest to shrink into the minimum surface area possible. Surface tension results from the greater attraction of liquid molecules to each other (due to cohesion). FIG. 3 shows formulas for calculating capillary rise (capillary action between plates). See also Figure 7.

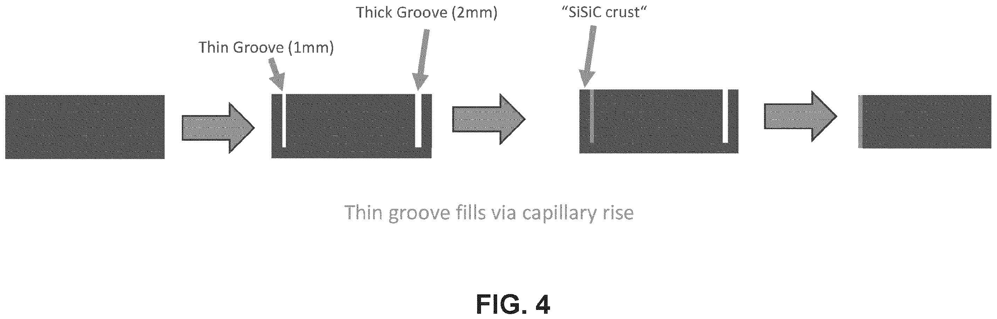

FIG. 4 shows an example embodiment of the method of the invention. The method includes the steps of producing a SiC green body with a groove near the perimeter (methods of production of the green body (preform) include, but are not limited to, green machining, 3D printing, casting, etc.); infiltrating the SiC green body with silicon (thin grooves fill via capillary rise); removing (via grinding, machining, etc.) the SiSiC crust to reveal the Si surface present in the groove; and polishing or machining the Si surface. Methods for removing the SiSiC sacrificial layer ("SiSiC crust") include, but are not limited to, CNC machining, grinding, electrical discharge machining (EDM), wire sawing, laser machining, etc. When removing the SiSiC sacrificial layer, one can visually tell when the silicon layer is reached.

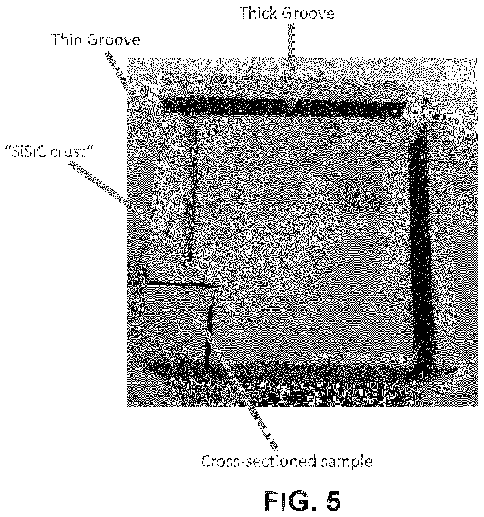

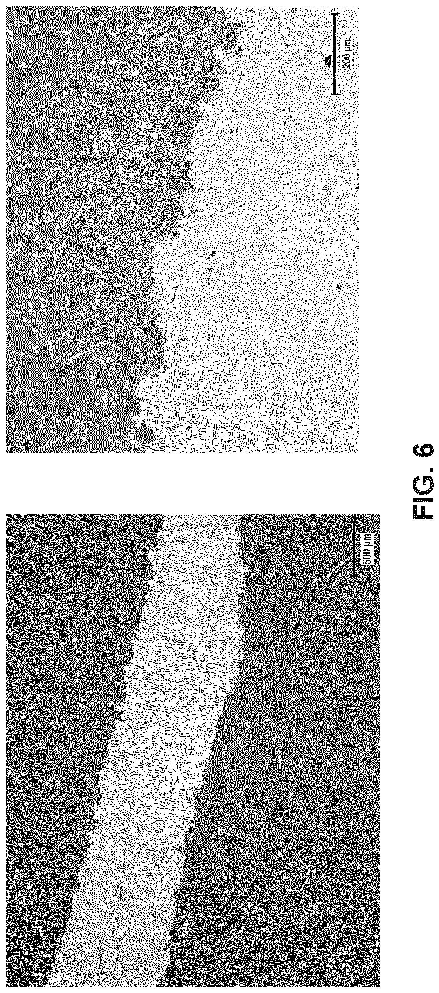

FIG. 5 shows a cross-sectioned sample with thick and thin grooves. In this sample, differing channel widths were cut near the edges of the preform to illustrate the effect of thickness of the groove on the capillary action. A band saw was used for cutting the thicker groove and a razor blade was used for cutting the thinner groove. In one embodiment, the width of the thick groove is about 2mm and the width of the thin groove is about 1mm. After infiltration, it was found that the thicker grooves did not fill, but the thinner groove filled with silicon via capillary rise. FIG. 6 shows the microstructure of a cross-sectioned thin groove (shows layer of silicon).

As stated above, the method disclosed herein allows for formation of an in-situ single-phase silicon layer which is sufficiently thick to machine or polish a mirror surface thereon. In some embodiments, the grooves to create the in-situ silicon layer are between about 0.1 - 1.5 mm. In other embodiments, the thickness of the in-situ single-phase silicon layer may be, for example, about or at least 0.2 mm; about or at least 0.5 mm; about or at least 0.75 mm; about or at least 1.0 mm; or in the range of at least 0.2 mm but less than 1.5 mm. In further embodiments, the grooves are at least 0.5 mm, but less than 1.5 mm.

The body may have one or more grooves near the perimeter, as described above. The grooves may be within about 0.5mm to 2mm of the edge of the body and the SiSiC material between the groove and the edge of the body is the SiSiC sacrificial layer ("SiSiC crust"). The crust is removed to produce a polishable, single-phase Si surface. In some embodiments, the SiC green body has two grooves near the perimeter. In other embodiments, the SiC green body has two grooves that are perpendicular. In some embodiments, each of the two grooves are within 0.5mm to 2mm of the edge of said SiC green body. The grooves may also be parallel or have other configurations, depending on the desired placement of the resulting mirror surface.

FIG. 7 shows the relationship between channel design and mirror height. The relevant values are Si surface temperature (at melting point) $\gamma$ = 721 mN/m; Si density (at melting point) $\rho$ = 2.57 g/cm$^3$; gravitational acceleration g = 9.8 m/s$^2$; and contact angle (measured) $\theta$ = 54°. Relevant formula is as follows:

$$h = \frac{2\gamma cos\theta}{\rho dg}$$

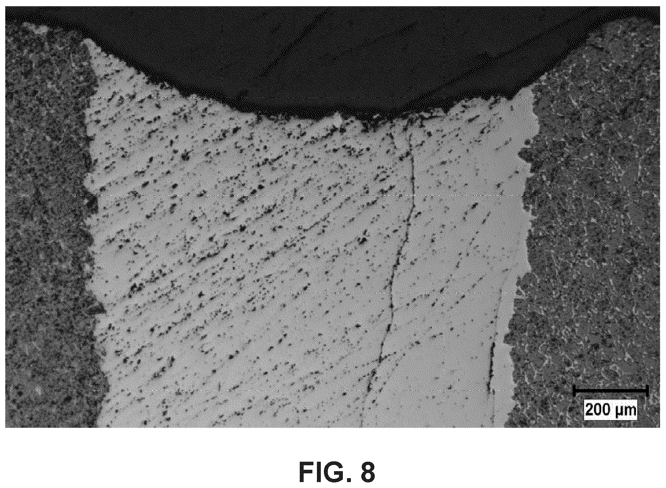

This shows that at small channel widths, very tall mirror surfaces can be produced. See also Figure 3. Ranges of appropriate channel widths are presented in FIG. 7 based on the capillary rise equation. Values are calculated based on capillary rise equation, silicon properties, and measured contact angle from FIG. 8.

FIG. 8 shows a filled groove with the contact angle noted.

The ability to produce vertical silicon surfaces on reaction bonded SiC via capillary rise has broad applicability. In one embodiment, applications of this method may be used to create a mirror surface at lower cost and processing time. In particular value are applications with Si surfaces including but not limited to in-situ distance measurement interferometer mirrors on reaction bonded SiC stages; reaction bonded SiC components with low particle generation; and reaction bonded SiC components with machinable and/or polishable surface layer.

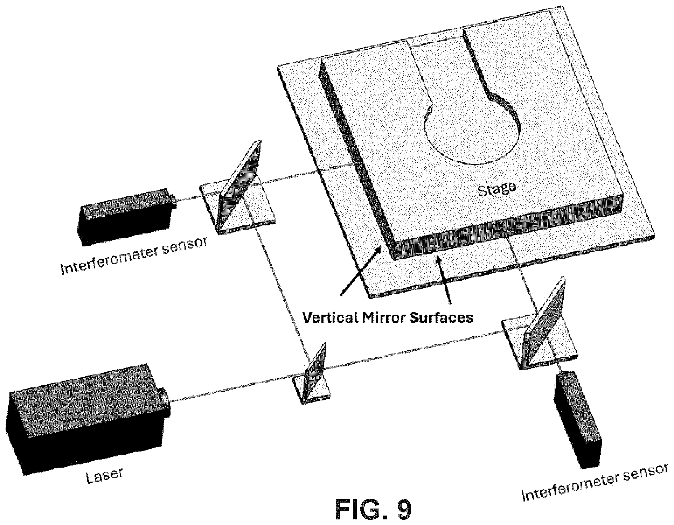

FIG. 9 shows an example mirror substrate of the invention, specifically an interferometer stage. The figure illustrates a schematic of a distance measuring interferometer stage with X Y vertical mirror surfaces. The X Y mirror surfaces are made by the method of the invention from a body having two perpendicular grooves. In this embodiment, a laser and two interferometer sensors are shown. Stages/mirror plates come in a wide range of designs and sizes based on the wafer size and application. In one embodiment, a high volume mirror plate may be for a 300mm diameter wafer, thus the x y mirror surface would be in excess of 300mm.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "etc.", "e.g.," and "for example" set off lists of one or more non-limiting examples, instances, or illustrations.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1. A method for making vertical single-phase silicon surfaces in-situ on a reaction bonded body by utilizing the capillary rise mechanism comprising:

producing a SiC green body with one or more grooves near the perimeter;
infiltrating the SiC green body with silicon where said grooves fill via capillary rise;
removing the SiSiC material between the groove and the edge of the body to reveal the single-phase Si surface present in the groove; and
polishing or machining the Si surface.

2. The method of claim 1, wherein producing a SiC green body is carried out by green machining, 3D printing, and/or casting.

3. The method of claim 1, wherein removing the SiSiC material between the groove and the edge of the body is carried out via grinding or machining.

4. The method of claim 1, wherein removing the SiSiC material between the groove and the edge of the body is carried out via CNC machining, grinding, EDM, wire sawing, or laser machining.

5. The method of claim 1, wherein said grooves are between about 0.1 - 1.5 mm.

6. The method of claim 5, wherein said grooves are at least 0.5 mm, but less than 1.5 mm.

7. The method of claim 1, wherein said grooves are within 0.5mm to 2mm of the edge of said SiC green body.

8. The method of claim 1, wherein said SiC green body has one groove near the perimeter.

9. The method of claim 1, wherein said SiC green body has two grooves near the perimeter.

10. The method of claim 9, wherein said two grooves are perpendicular.

11. The method of claim 10, wherein each of said two grooves are within 0.5mm to 2mm of the edge of said SiC green body.

12. The method of claim 10, wherein said two grooves create X Y vertical mirror surfaces.

13. The method of claim 12, wherein said vertical single-phase silicon surfaces are used to create an interferometer stage.

14. The method of claim 1, wherein said polishing or machining the Si surface results in a surface having less than about 50 Å roughness.

15. The method of claim 1, wherein said polishing or machining the Si surface results in a surface having reflectivity in the range of about 90-99%.

**FIG. 1**

FIG. 2

# Capillary Action Between Plates

surface tension $(H_2O)$
$$= \gamma = 72 \text{dyne/cm}$$

$$1 \text{dyne} = 10^{-5} \text{N}$$

$$F = L\gamma\cos\theta$$
$$= 2\ell\gamma\cos\theta$$

glass plates →

contact angle $\theta = 0°$

$h = ?$

$$w = mg = \rho(V)g = \rho(d\ell h)g$$
$$w = F$$
$$\rho(d\ell h)g = 2\ell\gamma\cos\theta \Rightarrow \boxed{h = \frac{2\gamma\cos\theta}{\rho dg}}$$

**FIG. 3**

Thin Groove (1mm)

Thick Groove (2mm)

"SiSiC crust"

Thin groove fills via capillary rise

**FIG. 4**

Thick Groove

Thin Groove

"SiSiC crust"

Cross-sectioned sample

FIG. 5

FIG. 6

FIG. 7

**FIG. 8**

**Vertical Mirror Surfaces**

Interferometer sensor

Interferometer sensor

Laser

Stage

**FIG. 9**

# EUROPEAN SEARCH REPORT

**Application Number**

EP 25 19 0229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 279 470 A1 (II VI DELAWARE INC [US]) 22 November 2023 (2023-11-22) * paragraphs [0018], [0019], [0022], [0024], [0025], [0028]; claims; figures * | 1-15 | INV. C04B35/573 C04B35/653 C04B41/00 C04B41/50 C04B41/53 C04B41/85 C04B41/91 G02B5/08 H01S3/04 |

----

TECHNICAL FIELDS SEARCHED (IPC)

C04B
G01B
H01S
G02B

The present search report has been drawn up for all claims

| Place of search | Date of completion of the search | Examiner |
|---|---|---|
| Munich | 19 December 2025 | Bonneau, Sébastien |

## ANNEX TO THE EUROPEAN SEARCH REPORT
## ON EUROPEAN PATENT APPLICATION NO.

EP 25 19 0229

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2025

| Patent document cited in search report | | Publication date | Patent family member(s) | | Publication date |
|---|---|---|---|---|---|
| EP 4279470 | A1 | 22-11-2023 | EP | 4279470 A1 | 22-11-2023 |
| | | | JP | 2023171318 A | 01-12-2023 |
| | | | KR | 20230161364 A | 27-11-2023 |
| | | | US | 2023373871 A1 | 23-11-2023 |

EPO FORM P0459

For more details about this annex : see Official Journal of the European Patent Office, No. 12/82